# EUROPEAN PATENT SPECIFICATION

(11) **EP 1 662 744 B1**
(45) Date of publication and mention of the grant of the patent: **11.04.2007**
(21) Application number: 04257295.8
(22) Date of filing: 24.11.2004
(51) Int. Cl.: H04L 29/06, H04Q 7/32

(54) **System and method for porting identity information assigned to a mobile communications device**
Vorrichtung und Verfahren zur Weitergabe einer an ein mobiles Endgerät zugeordneten Identitätsinformation
Système et procédé pour la transmission d'une information d'identité attribuée à un dispositif de communication mobile

(43) Date of publication of application: 31.05.2006
(60) Divisional application: 07102378.2
(73) Proprietor: Research In Motion Limited, Waterloo, Ontario N2L 3W8 (CA)
(72) Inventor: Whittington, Graeme, Ontario N2V 2M1 (CA); Little, Herb A., Ontario N2T 2V8 (CA); Lewis, Allan David, Ontario N0B 2E0 (CA); Godfrey, James, Ontario N2L 6E4 (CA); Plumb, Marc, Ontario N2G 1K1 (CA)
(74) Representative: Roberts, Gwilym Vaughan

(56) References cited:
- WO-A-20/04054298
- DE-A1- 19 737 126
- US-A1- 2003 061 503

## Description

This patent application discloses subject matter related to the subject matter disclosed in the following commonly owned co-pending patent applications: (i) "SYSTEM AND METHOD FOR SECURING A PERSONALIZED INDICIUM ASSIGNED TO A MOBILE COMMUNICATIONS DEVICE," filed , Application No. RIM No. ID-1127, Attorney Docket No. 1400-1002US), in the name(s) of: David Bajar, Herb A. Little, James Godfrey, Allan David Lewis, Wen Gao, Marc Plumb, Michael Brown, Graeme Whittington, and Neil Adams; (ii) "SYSTEM AND METHOD FOR ASSIGNING A PERSONALIZED INDICIUM TO A MOBILE COMMUNICATIONS DEVICE," filed , Application No. (RIM No. ID-1125, Attorney Docket No. 1400-1000US), in the name(s) of: Graeme Whittington, Allan David Lewis, James Godfrey, Christopher Smith, Arun Munje, Thomas Leonard Trevor Plestid, David R. Clark, Michal A. Rybak, Robbie John Maurice, and Marc Plumb; and (iii) "SYSTEM AND METHOD FOR MANAGING SECURE REGISTRATION OF A MOBILE COMMUNICATIONS DEVICE," filed , Application No. (RIM No. ID-1128, Attorney Docket No. 1400-1003US), in the name(s) of: David Bajar, Allan David Lewis, Wen,Gao, Herb A. Little, James Godfrey, Marc Plumb, Michael Brown, and Neil Adams.

### FIELD OF THE APPLICATION

The present patent application generally relates to wireless packet data service networks. More particularly, and not by way of any limitation, the present patent application is directed to a system and method for porting a personalized indicium assigned to a mobile communications device that is operable to be disposed in a wireless packet data service network.

### BACKGROUND

It is becoming commonplace to use wireless packet data service networks for effectuating data sessions with mobile communications devices. In some implementations, indicia such as Personal Information Numbers or PINs are assigned to the devices in order to facilitate certain aspects of service provisioning, e.g., security, validation and service authentication, et cetera. In such scenarios, it becomes imperative that no two devices have the same indicium (i.e., collision). Further, such PIN indicia are mapped to individual Internet Protocol (IP) addresses used in packet-switched networks so that a mobile communications device continues to send and receive messages even if its IP address is changed for some reason. For example, wireless carriers may dynamically assign an IP address to a data-enabled mobile device, and if that device is out of coverage, the previously assigned IP address is reclaimed and recycled for another device requesting service.

In addition, unique PIN indicia may be used for effectuating peer-to-peer type communications over a wireless carrier, e.g., direct messaging between two handheld devices, wherein the PINs assigned to the devices are used as messaging addresses. Accordingly, when a device is returned for repair or the user needs to switch to another device, possibly temporarily, the PIN address will have to be updated appropriately by all members of the user's contact list maintained with respect to the peer-to-peer messaging service. On the other hand, the user's identity for other types of communication, e.g., email address, may remain the same, however. Clearly, such a scenario is inconvenient for the subscribers as well as their contact members, and raises a challenging issue regarding PIN-based information management at the network level.

US 2003/0061503 A1 relates to an authentication method for remote communications. The method involves communication with an authenticable device via a secure link using secure personalization to authenticate an activity request of a non-authenticable device.

### SUMMARY

Aspects and features of the present invention are set out in the accompanying claims.

In one embodiment, a scheme is provided for porting a personalized indicium, i.e., a Personal Information Number or PIN, from a first mobile communications device to a second mobile communications device. Upon receiving identity information from the first mobile communications device via a secure peer-to-peer communication session, the second mobile communications device is operable to negotiate with a network node using at least a portion of the received identity information for reassigning the PIN to an identifier associated therewith (i.e., device or subscriber identifiers such as IMEI, IMSI, ESN, MIN, et cetera). After successfully porting the PIN to the second mobile communications device, a service provisioning database is accordingly updated.

In another embodiment, a PIN porting method is disclosed which comprises: transferring identity information from a first mobile communications device to a second mobile communications device, the first mobile communications device's personalized indicium comprising a PIN that is mapped to an identifier associated therewith; and negotiating by the second mobile communications device with a network node using at least a portion of the identity information for reassigning the PIN to an identifier associated with the second mobile communications device.

In another embodiment, a mobile communications device is disclosed which comprises: logic means operable to engage in a communication session with another mobile communications device having a personalized indicium comprised of a PIN, wherein the PIN is mapped to an identifier relating to another mobile communications device; and logic means operable for negotiating with a network node using at least a portion of identity information received from the another mobile communications device for reassigning the PIN to an identifier associated with the mobile communications device.

In yet another embodiment, a network system is disclosed for porting a personalized indicium from a first mobile communications device to a second mobile communications device, which comprises: means for transferring identity information from the first mobile communications device to the second mobile communications device, the first mobile communications device's personalized indicium comprising a PIN that is mapped to an identifier associated therewith; and means for negotiating by the second mobile communications device with a network node using at least a portion of the identity information for reassigning the PIN to an identifier associated with the second mobile communications device.

### BRIEF DESCRIPTION OF THE DRAWINGS

A more complete understanding of the embodiments of the present patent application may be had by reference to the following Detailed Description when taken in conjunction with the accompanying drawings wherein:

FIG. 1 depicts an exemplary network environment including a wireless packet data service network wherein an embodiment of the present patent application may be practiced;

FIG. 2 depicts additional details of an exemplary relay network operable with a mobile communications device in accordance with an embodiment;

FIG. 3 depicts a software architectural view of a mobile communications device (MCD) according to one embodiment;

FIGS. 4A and 4B depict a flowchart of an embodiment for porting a PIN indicium assigned to a first MCD to another MCD; and

FIG. 5 depicts a block diagram of a mobile communications device according to one embodiment.

### DETAILED DESCRIPTION OF THE DRAWINGS

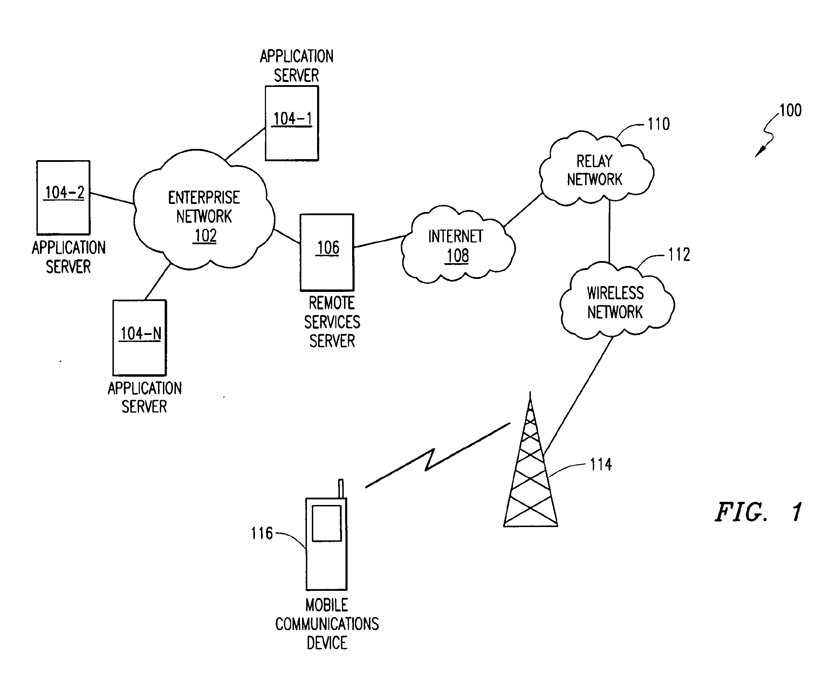

A system and method of the present patent application will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary network environment 100 including a wireless packet data service network 112 wherein an embodiment of the present patent application may be practiced. An enterprise network 102, which may be a packet-switched network, can include one or more geographic sites and be organized as a local area network (LAN), wide area network (WAN) or metropolitan area network (MAN), et cetera, for serving a plurality of corporate users. A number of application servers 104-1 through 104-N disposed as part of the enterprise network 102 are operable to provide or effectuate a host of internal and external services such as email, video mail, Internet access, corporate data access, messaging, calendaring and scheduling, information management, and the like. Accordingly, a diverse array of personal information appliances such as desktop computers, laptop computers, palmtop computers, et cetera, although not specifically shown in FIG. 1, may be operably networked to one or more of the application servers 104-i, i = 1, 2,...,N, with respect to the services supported in the enterprise network 102.

Additionally, a remote services server 106 may be interfaced with the enterprise network 102 for enabling a corporate user to access or effectuate any of the services from a remote location using a suitable mobile communications device (MCD) 116. A secure communication link with end-to-end encryption may be established that is mediated through an external IP network, i.e., a public packet-switched network such as the Internet 108, as well as the wireless packet data service network 112 operable with MCD 116 via suitable wireless network infrastructure that includes a base station (BS) 114 . In one embodiment, a trusted relay network 110 may be disposed between the Internet 108 and the infrastructure of wireless packet data service network 112. In another embodiment, the infrastructure of the trusted relay network 110 may be integrated with the wireless packet data service network 112, whereby the functionality of the relay infrastructure, certain aspects of which will be described in greater detail below, is consolidated as a separate layer within a "one-network" environment. Additionally, by way of example, MCD 116 may be a data-enabled mobile handheld device capable of receiving and sending messages, web browsing, interfacing with corporate application servers, et cetera, regardless of the relationship between the networks 110 and 112. Accordingly, a "network node" may include both relay functionality and wireless network infrastructure functionality in some exemplary implementations.

For purposes of the present patent application, the wireless packet data service network 112 may be implemented in any known or heretofore unknown mobile communications technologies and network protocols, as long as a packet-switched data service is available therein for transmitting packetized information. For instance, the wireless packet data service network 112 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 112 may comprise an Enhanced Data Rates for GSM Evolution (EDGE) network, an Integrated Digital Enhanced Network (IDEN), a Code Division Multiple Access (CDMA) network, a Universal Mobile Telecommunications System (UMTS) network, or any 3^{rd} Generation (3G) network. As will be seen hereinbelow, the embodiments of the present patent application for securing a personalized indicium such as a PIN with respect to MCD 116 will be described regardless of any particular wireless network implementation.

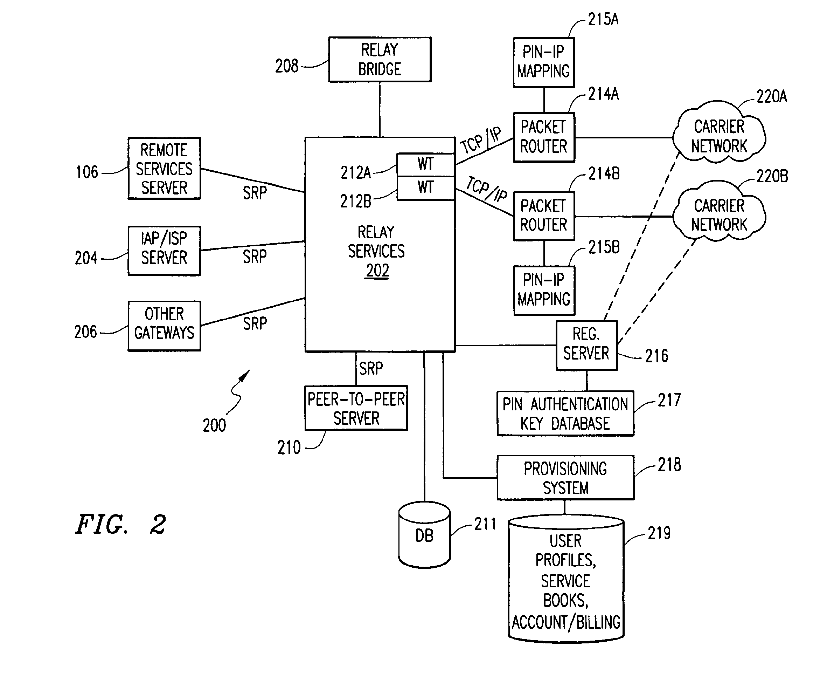

FIG. 2 depicts additional details of an exemplary relay network infrastructure 200 operable as part of relay network 110 interfacing with the wireless packet data service network 112 described above. A relay services node 202 is operable, at least in part, for providing connectivity between MCDs and various data application services (enterprise services, external IP data services, et cetera), regardless of the geographic location of the MCDs and their respective wireless carriers. Also, since multiple relay services nodes can co-exist in a distributed network architecture, a relay bridge 208 may be provided in operable connection with the relay services node 202 for supporting inter-relay connectivity. In one implementation, relay bridge 208 connects with separate relay node sites, forming tunnels between relays over which MCD messages can flow to and from services, irrespective of the region where the MCD is in.

Communication between the relay services node 202 and various application gateways and servers is effectuated using any suitable protocol, e.g., Server Relay Protocol (SRP), preferably over IP links. By way of illustration, remote services server 106 associated with the enterprise network 102 (shown in FIG. 1) communicates with the relay using SRP for effectuating internal data services with respect to the enterprise's mobile subscribers. Likewise, reference numerals 204 and 206 refer to external application gateways, such as Internet Service Provider (ISP) or Internet Access Provider (IAP) servers, and other gateways, respectively, which are also interfaced with the relay node 202 using SRP. A peer-to-peer server 210 may also be provided in operable connection with the relay node 202 for handling peer-level messaging between two MCDs using their respective PIN indicia.

Additionally, a database 211 may be provided in operable connection with the relay node 202 for handling and managing MCD location information. Preferably, this location information is stored by PIN indicia of the MCDs, which may be programmed into the devices at the time of manufacture or dynamically assigned afterwards, wherein the records maintain a particular device's last known location. A registration server 216 is operable for providing registration services for MCDs when they are initially activated or when the user re-registers due to moving to a different wireless network coverage area. In one implementation, the location information of registration server 216 may be programmed into an MCD. When the MCD registers successfully, registration server 216 is operable to provide the serving relay node's location, whereupon data sessions may be engaged by the MCD. Further, a database 217 is associated with the registration server 216 for storing a PIN authentication key provided by the MCD during its registration with the network. As will be seen in greater detail below, the PIN authentication key may be used by the network logic in facilitating the porting of the PIN indicium of an MCD to another MCD via a secure peer-to-peer communication session so that a subscriber may upgrade or otherwise replace his or her handheld device without relinquishing associated service books, provisioning or subscriber profiles, accounting/billing data, or any PIN-based service such as peer-to-peer messaging.

One or more wireless transport (WT) interfaces are provided as part of relay services node 202 for connecting with wireless carrier networks that service MCDs. By way of illustration, WT 212A and WT 212B communicate with respective packet routers 214A and 214B using TCP/IP links, which route data packets to and from respective wireless packet data service networks, exemplified in FIG. 2 as carrier network 220A and carrier network 220B. To facilitate accurate routing, packet routers 214A, 214B are provided with PIN-IP mapping tables 215A and 215B that are used to route packets over IP networks. When a WT addresses a packet by PIN, the corresponding packet router interrogates the mapping table to look up and retrieve the current IP address for the MCD. In one implementation, the packet routers are operable to update the IP address of the MCD in the mapping tables every time they receive a packet. In another implementation, the IP-PIN mapping tables may be updated as necessary, e.g., when the IP address of an MCD is changed because it is dynamically assigned and may be reclaimed after the MCD has roamed out of a serving area.

Continuing to refer to FIG. 2, registration server 216, which handles administration and registration services for MCDs, may also be provided with separate WT and packet routing for interfacing with the carrier networks 220A, 220B, although not specifically shown. A provisioning system (PRV) 218 may be co-located or otherwise associated with the relay services node 202 for setting up and managing various service providers (i.e., carrier networks), subscribers, MCD manufacturers, resellers, and other entities in order to support any number of service and market differentiation requirements. Additionally, the provisioning system 218 may include logic for provisioning personalized indicia (e.g., PIN assignment and management) with respect to the MCDs. Also, subscriber validation logic may be provided as part of the provisioning system 218. A service provisioning database 219 is therefore associated with the provisioning system 218 for maintaining subscriber/user profiles, service books, accounting information, et cetera, based on PINs, hard-coded device identifiers, subscriber identifiers, and other indicia.

One skilled in the art should appreciate that the various databases and service logic processing set forth above with respect to the relay network may be realized in suitable hardware, firmware and/or firmware logic blocks or in combination thereof. Furthermore, as alluded to before, the functionality of the relay network may also be integrated within a wireless carrier network, whereby a "network node" may generally comprise the relay layer functionality as well.

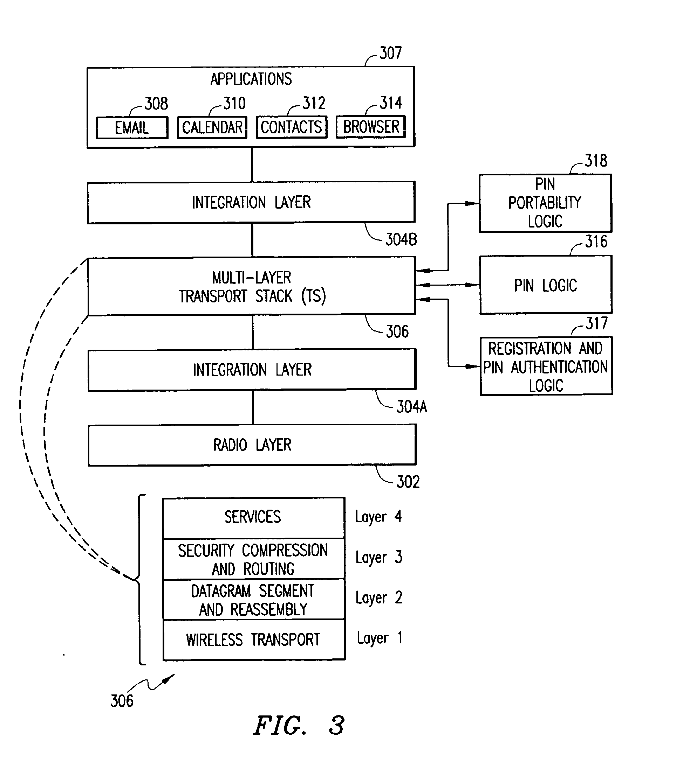

FIG. 3 depicts a software architectural view of a mobile communications device operable according to one embodiment. A multi-layer transport stack (TS) 306 is operable to provide a generic data transport protocol for any type of corporate data, including email, via a reliable, secure and seamless continuous connection to a wireless packet data service network. As illustrated in the embodiment of FIG. 3, an integration layer 304A is operable as an interface between the MCD's radio layer 302 and the transport stack 306. Likewise, another integration layer 304B is provided for interfacing between the transport stack 306 and the user applications 307 supported on the MCD, e.g., email 308, calendar/scheduler 310, contact management 312 and browser 314. Although not specifically shown, the transport stack 306 may also be interfaced with the MCD's operating system. In another implementation, the transport stack 306 may be provided as part of a data communications client module operable as a host-independent virtual machine on a mobile device.

The bottom layer (Layer 1) of the transport stack 306 is operable as an interface to the wireless network's packet layer. Layer 1 handles basic service coordination within the exemplary network environment 100 shown in FIG. 1. For example, when an MCD roams from one carrier network to another, Layer 1 verifies that the packets are relayed to the appropriate wireless network and that any packets that are pending from the previous network are rerouted to the current network. The top layer (Layer 4) exposes various application interfaces to the services supported on the MCD. The remaining two layers, Layer 2 and Layer 3, are responsible for datagram segmentation/reassembly and security, compression and routing, respectively.

A PIN logic module 316 provided as part of the MCD's software environment is disposed in operable communication with the transport stack 306 as well as the OS environment. In one embodiment, the PIN logic module 316 comprises logic operable to request a PIN indicium from the provisioning network in a dynamic assignment, wherein a temporary PIN may be generated for effectuating pre-registration communication with the network. Alternatively, the PIN logic may include storage means for storing a PIN that is encoded during manufacture. Regardless of the PIN assignment mechanism, once a PIN is persistently associated with an MCD, it is bound to the MCD's hardware device identifier(s) and/or subscriber identifier(s) such as, e.g., International Mobile station Equipment Identity (IMEI) parameters, International Mobile Subscriber Identity (IMSI) parameters, Electronic Serial Number (ESN) parameters, Mobile Identification Number (MIN) parameters, et cetera, that are associated with MCDs depending on the wireless network technologies and protocols.

Continuing to refer to FIG. 3, a registration and PIN authentication logic module 317 provided as part of the MCD's software environment is disposed in operable communication with the transport stack 306 as well as the OS environment for effectuating registration procedures and PIN authentication services (e.g., generation of a PIN authentication key for transmission via a registration request to the network, digital signature generation in a challenge response, et cetera).

A PIN portability logic module 318, also provided as part of the MCD's software environment, may interface with applications 307 via TS 306, wherein suitable application logic includes means operable to initiate a peer-to-peer communication session with another MCD. Additional logic is also associated therewith for negotiating with a network node using at least a portion of the information received from the other MCD for reassigning the other MCD's PIN to itself (i.e., the negotiating MCD). Since PIN assignment and management generally involves mapping at least one of a hard-coded device identifier (such as, e.g., IMEI, ESN, et cetera) or a subscriber identifier (e.g., IMSI) (collectively, "identifier") associated with an MCD to a corresponding unique PIN in the network databases, in addition to PIN's association to service provisioning and authentication features, PIN portability is predicated upon disassociating one PIN-to-ID1 mapping and replacing it with another PIN-to-ID2 mapping so that the PIN is bound to a different device (having the identifier ID2). Preferably, such porting transaction is effectuated in a secure manner so that a valid PIN is not transferred to an unauthorized device. For purposes of the present patent application, therefore, the process of transferring a PIN is provided as comprising two parts: (a) transfer of identification, authentication and service-enabling information (collectively, "identity information"), and (b) claiming or reassignment of the PIN using at least a portion of the identity information (e.g., the authentication information). In addition, proper failsafe features are preferably implemented during the PIN transfer process in order to ensure that regular data transactions do not get redirected to the target device (i.e., the device negotiating for the reassignment of the PIN) until after the transfer is complete and validated. Otherwise, messages could be lost due to decryption failures, for example.

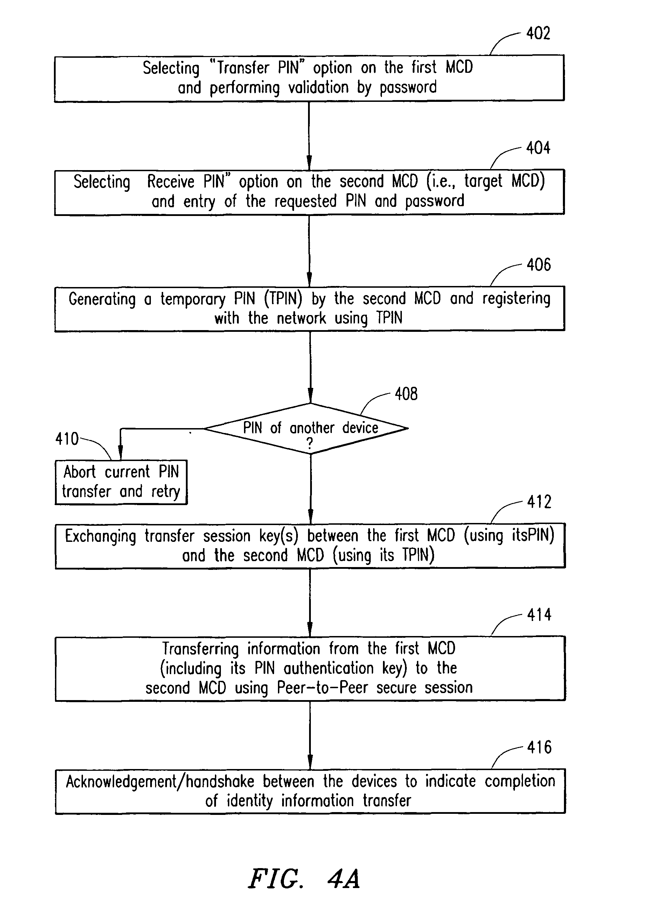

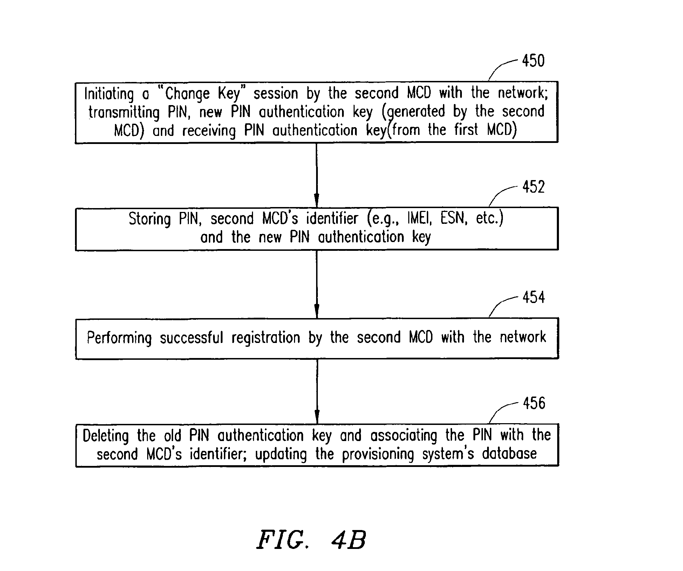

FIGS. 4A and 4B depict a flowchart of an embodiment for porting a PIN indicium assigned to a first MCD to another MCD. In particular, FIG. 4A depicts the transfer process of identity information from the first MCD to the second MCD (i.e., the target device). In a presently preferred exemplary embodiment, a secure peer-to-peer communication session is effectuated between the two devices via the relay network's peer-to-peer server. On the first device, the user selects a "Transfer PIN" option, whereupon appropriate validation may be performed as required (block 402). For instance, a dialog screen on the MCD may request that a password be entered. The password may be a short-term alphanumeric string used to identify the user for effectuating any PIN-based transactions, e.g., identity information transfer to another device. On the second device, i.e., the target MCD, the user selects a "Receive PIN" option, whereupon the requested PIN and the password are entered (block 404). Using the PIN logic on the target device, a temporary PIN (TPIN) is generated for registering with the relay/network node (block 406). In one implementation, the TPIN may be randomly selected from a selected range of numbers or calculated using a hashing technique on the MCD's device/subscriber identifiers (e.g., IMEI/ESN parameters). If the TPIN generated by the target MCD is the same as the PIN used by another device (block 408), then the current transfer process may be aborted, preferably with a retry option using a new TPIN (block 410). Otherwise, through a sequence of packets exchanged between the two devices (preferably initiated by the target device since it is aware of both its own TPIN and the PIN of the first device), the first MCD using its PIN and the second MCD using its TPIN negotiate a set of one or more transfer session encryption/decryption keys (e.g., public/private keys) in order to establish a secure connection between the two devices (block 412). Once the secure connection is established, identity information is transferred from the first MCD to the second MCD using the peer-to-peer service (block 414). After the information has been received, an acknowledgment/handshake process may take place between the devices to indicate completion of the identity information transfer (block 416).

Referring now in particular to FIG. 4B, an embodiment of PIN reassignment process is shown therein as a flowchart, where the second MCD negotiates with the network node for PIN reassignment. A "Change Key" session is initiated by the second MCD using a suitable command transmitted to the relay network's registration server, wherein the command preferably includes the PIN, the received PIN authentication key (from the first MCD) and a new PIN authentication key generated by the second MCD (block 450). The PIN, new PIN authentication key and the second MCD's identifier information (i.e., IMEI, ESN, etc.) are stored in the registration server database (452). Upon successful registration by the second MCD (block 454), the network may delete the "old" PIN authentication key (i.e, the first MCD's key) and disassociate the PIN/device ID mapping relating to the first MCD. Thereafter, a new PIN/device ID mapping is created using the second MCD's ID information, which is transmitted to the provisioning system for updating its database (block 456).

Those skilled in the art will recognize upon reference hereto that several additional features, modifications and enhancements may be possible with respect to the PIN portability process set forth hereinabove. For example, the target MCD may not be allowed to drop the old PIN authentication key until it receives appropriate response(s) from the registration server since repeated registration attempts are sometimes necessary. Also, as alluded to earlier, a variety of administrative passwords may be imposed in order to ensure that the person using the MCDs is in fact allowed to use them. Relatedly, the application programming interfaces (APIs) and storage locations for the PIN and password information on the device are preferably provided to be secure (i.e., "unhackable"); otherwise identity theft may become an issue. Further, an enterprise-based information technology (IT) policy may be implemented so as to disable the PIN portability features on a subscriber-by-subscriber basis.

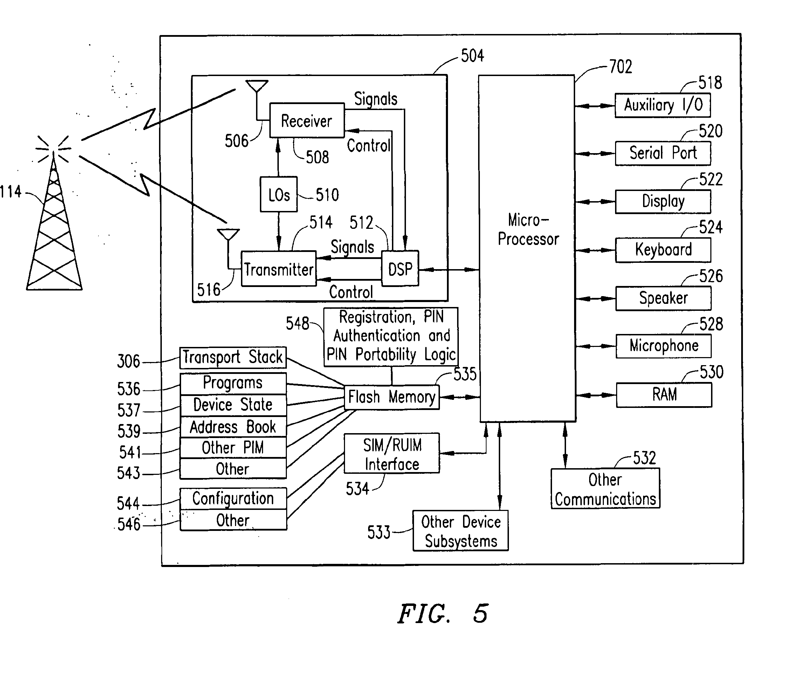

FIG. 5 depicts a block diagram of a mobile communications device operable according to one embodiment. It will be recognized by those skilled in the art upon reference hereto that although an embodiment of MCD 116 may comprise an arrangement similar to one shown in FIG. 5, there can be a number of variations and modifications, in hardware, software or firmware, with respect to the various modules depicted. Accordingly, the arrangement of FIG. 5 should be taken as illustrative rather than limiting with respect to the embodiments of the present patent application. A microprocessor 502 providing for the overall control of an embodiment of MCD 116 is operably coupled to a communication subsystem 504 which includes a receiver 508 and transmitter 514 as well as associated components such as one or more local oscillator (LO) modules 510 and a processing module such as a digital signal processor (DSP) 512. As will be apparent to those skilled in the field of communications, the particular design of the communication module 504 may be dependent upon the communications network with which the mobile device is intended to operate. In one embodiment, the communication module 504 is operable with both voice and data communications. Regardless of the particular design, however, signals received by antenna 506 through BS 114 are provided to receiver 508, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 512, and provided to transmitter 514 for digital-to-analog (D/A) conversion, frequency up conversion, filtering, amplification and transmission over the air-radio interface via antenna 516.

Microprocessor 502 also interfaces with further device subsystems such as auxiliary input/output (I/O) 518, serial port 520, display 522, keyboard 524, speaker 526, microphone 528, random access memory (RAM) 530, a short-range communications subsystem 532, and any other device subsystems generally labeled as reference numeral 533. To control access, a Subscriber Identity Module (SIM) or Removable user Identity Module (RUIM) interface 534 is also provided in communication with the microprocessor 502. In one implementation, SIM/RUIM interface 534 is operable with a SIM/RUIM card having a number of key configurations 544 and other information 546 such as identification and subscriber-related data.

Operating system software and transport stack software may be embodied in a persistent storage module (i.e., non-volatile storage) such as Flash memory 535. In one implementation, Flash memory 535 may be segregated into different areas, e.g., storage area for computer programs 536 as well as data storage regions such as device state 537, address book 539, other personal information manager (PIM) data 541, and other data storage areas generally labeled as reference numeral 543. A logic module 548 is provided for storing a PIN assigned to the MCD, dynamically or otherwise, as well as for generating a PIN authentication key for transmission via registration. Also associated therewith is suitable logic for supporting the various PIN portability processes and operations described hereinabove.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present invention as set forth in the following claims.

## Claims

1. A method for porting a personal information number, PIN, from a first mobile communications device to a second mobile communications device, comprising:
transferring (414, 416) identity information from said first mobile communications device to said second mobile communications device, said first mobile communications device having a PIN that is mapped to an identifier associated therewith; and
negotiating (450, 452, 454) by said second mobile communications device with a network node (216) using at least a portion of said identity information for reassigning said PIN to an identifier associated with said second mobile communications device.

2. The method for porting a PIN as recited in claim 1, wherein said network node (216) is operable with a wireless packet data service network comprising one of a General Packet Radio Service, "GPRS", network, an Enhanced Data Rates for Global System for Mobile Communications "GSM" Evolution "EDGE" network, a 3^{rd} Generation "3G" network an Integrated Digital Enhanced Network "IDEN," a Code Division Multiple Access "CDMA" network and a Universal Mobile Telecommunications System "UMTS" network.

3. The method for porting a PIN as recited in claim 1 or claim 2, wherein said identifier associated with one of said first and second mobile communications devices comprises at least one of an International Mobile station Equipment Identity "IMEI" parameter, an International Mobile Subscriber Identity "IMSI" parameter, an Electronic Serial Number "ESN" parameter and a Mobile Identification Number "MIN" parameter.

4. The method for porting a PIN as recited in claim 1, claim 2 or claim 3, wherein said identity information is transferred from said first mobile communications device to said second mobile communications device using a peer-to-peer communication session upon said second mobile communications device obtaining a temporary PIN associated therewith.

5. The method for porting a PIN as recited in claim 4, further comprising:
determining (408) if said temporary PIN is identical to a PIN used by another mobile communications device; and
if so, terminating (410) said step of transferring said identity information to said second mobile communications device.

6. The method for porting a PIN as recited in claim 5, further comprising effectuating an acknowledgment process (416) between said first and second mobile communications devices upon completion of transferring said identity information.

7. A mobile communications device (116), comprising:
logic means (318) operable to engage in a communication session with another mobile communications device, said another mobile communications device having a Personal Information Number, PIN, wherein said PIN is mapped to an identifier relating to said another mobile communications device; and
logic means (318) operable for negotiating with a network node (216) using at least a portion of identity information received from said another mobile communications device for reassigning said PIN to an identifier associated with said mobile communications device.

8. The mobile communications device (116) as recited in claim 7, wherein said network node (216) is operable with a wireless packet data service network (112) comprising one of a General Packet Radio Service "GPRS" network, an Enhanced Data Rates for Global System for Mobile Communications "GSM" Evolution "EDGE" network, a 3^{rd} Generation "3G" network, an Integrated Digital Enhanced Network "IDEN", a Code Division Multiple Access "CDMA" network and a Universal Mobile Telecommunications System "UMTS" network.

9. The mobile communications device (116) as recited in claim 7 or claim 8, wherein said identifier associated with one of said mobile communications device and said another mobile communications device comprises at least one of an International Mobile station Equipment Identity "IMEI" parameter, an International Mobile Subscriber Identity "IMSI" parameter, an Electronic Serial Number "ESN" parameter and a Mobile Identification Number "MIN" parameter.

10. The mobile communications device (116) as recited in claim 7, claim 8 or claim 9, further comprising logic means (316) operable to generate a temporary PIN for registration with said network node.

11. The mobile communications device (116) as recited in claim 7, claim 8, claim 9 or claim 10, wherein said identity information comprises a first PIN authentication key generated by said another mobile communications device.

12. The mobile communications device (116) as recited in claim 11, further comprising logic means (317) operable to generate a second PIN authentication key.

13. The mobile communications device (116) as recited in claim 12, further comprising logic means (317) for registering with said network node (216) using said PIN ported from said another mobile communications device.

## Patentansprüche

1. Verfahren zum Portieren einer persönlichen Informationsnummer, PIN, von einem ersten mobilen Kommunikationsgerät zu einem zweiten mobilen Kommunikationsgerät, welches Verfahren aufweist:
Übermitteln (414, 416) von Identitätsinformation von dem ersten mobilen Kommunikationsgerät zu dem zweiten mobilen Kommunikationsgerät, wobei das erste mobile Kommunikationsgerät eine PIN aufweist, welche auf eine damit zugeordnete Kennung abgebildet ist, und
Verhandeln (450, 452, 454) durch das zweite mobile Kommunikationsgerät mit einem Netzwerkknoten (216), wobei zumindest eines Teils der Identitätsinformation verwendet wird, um die PIN wieder einer Kennung zuzuweisen, die dem zweiten mobilen Kommunikationsgerät zugeordnet ist.

2. Verfahren zum Portieren einer PIN nach Anspruch 1, wobei der Netzwerkknoten (216) mit einem kabellosen Paketdaten-Dienstnetzwerk betriebsfähig ist, welches eines aus einem General Packet Radio Service "GPRS"-Netzwerk, einem Enhanced Data Rates for Global System for Mobile Communications "GSM" Evolution "EDGE"-Netzwerk, einem 3^{rd} Generation "3G"-Netzwerk, einem Integrated Digital Enhanced-Netzwerk "IDEN", einem Code Division Multiple Access "CDMA"-Netzwerk und einem Universal Mobile Telecommunications System "UMTS"-Netzwerk aufweist.

3. Verfahren zum Portieren einer PIN nach Anspruch 1 oder 2, wobei die Kennung, die einem von dem ersten und dem zweiten mobilen Kommunikationsgerät zugeordnet ist, zumindest einen aus einem International Mobile station Equipment Identity "IMEI"-Parameter, einem International Mobile Subscriber Identity "IMSI"-Parameter, einem Electronic Serial Number "ESN"-Parameter, und einem Mobile Identification Number "MIN"-Parameter aufweist.

4. Verfahren zum Portieren einer PIN nach Anspruch 1, 2 oder 3, wobei die Identitätsinformation von dem ersten mobilen Kommunikationsgerät zu dem zweiten mobilen Kommunikationsgerät übermittelt wird unter Verwendung einer Peer-to-Peer-Kommunikationssitzung auf dem zweiten mobilen Kommunikationsgerät, welches eine damit zugeordnete temporäre Pin erhält.

5. Verfahren zum Portieren einer PIN nach Anspruch 4, welches weiters aufweist:
Ermitteln (408), ob die temporäre PIN identisch zu einer PIN ist, die von einem anderen mobilen Kommunikationsgerät verwendet wird; und
wenn dem so ist, Beenden (410) des Schrittes der Übermittlung der Identitätsinformation zu dem zweiten mobilen Kommunikationsgerät.

6. Verfahren zum Portieren einer PIN nach Anspruch 5, welches weiters das Bewirken eines Bestätigungsprozesses (416) zwischen dem ersten und dem zweiten mobilen Kommunikationsgerät bei Fertigstellung der Übermittlung der Identitätsinformation aufweist.

7. Mobiles Kommunikationsgerät (116), welches aufweist:
Logikmittel (318), die betriebsfähig sind, um in eine Kommunikationssitzung mit einem weiteren mobilen Kommunikationsgerät einzugreifen, wobei das andere mobile Kommunikationsgerät eine persönliche Informationsnummer, PIN, aufweist, wobei die PIN auf eine Kennung abgebildet ist, die sich auf das andere mobile Kommunikationsgerät bezieht; und
Logikmittel (318), die betriebsfähig sind, um mit einem Netzwerkknoten (216) zu Verhandeln wobei zumindest ein Teil der Identitätsinformation, die von dem anderen mobilen Kommunikationsgerät empfangen wurde, verwendet wird, um die PIN wieder einer Kennung zuzuweisen, die dem mobilen Kommunikationsgerät zugeordnet ist.

8. Mobiles Kommunikationsgerät (116) nach Anspruch 7, wobei der Netzwerkknoten (216) mit einem kabellosen Paketdaten-Dienstnetzwerk (112) betriebsfähig ist, welches eines aus einem General Packet Radio Service "GPRS"-Netzwerk, einem Enhanced Data Rates for Global System for Mobile Communications "GSM" Evolution "EDGE"-Netzwerk, einem 3rd Generation "3G"-Netzwerk, einem Integrated Digital Enhanced-Netzwerk "IDEN", einem Code Division Multiple Access "CDMA"-Netzwerk und einem Universal Mobile Telecommunications System "UMTS"-Netzwerk aufweist.

9. Mobiles Kommunikationsgerät (116) nach Anspruch 7 oder 8, wobei die Kennung, die einem von dem mobilen Kommunikationsgerät und dem anderen mobilen Kommunikationsgerät zugeordnet ist, zumindest einen aus einem International Mobile station Equipment Identity "IMEI"-Parameter, einem International Mobile Subscriber Identity "IMSI"-Parameter, einem Electronic Serial Number "ESN"-Parameter, und einem Mobile Identification Number "MIN"-Parameter aufweist.

10. Mobiles Kommunikationsgerät (116) nach Anspruch 7, 8 oder 9, welches weiters Logikmittel (316) aufweist, die betriebsfähig sind, um eine temporäre PIN für die Registrierung mit dem Netzwerkknoten zu erzeugen.

11. Mobiles Kommunikationsgerät (116) nach Anspruch 7, 8, 9 oder 10, wobei die Identitätsinformation einen von dem anderen mobilen Kommunikationsgerät erzeugten ersten PIN-Authentifizierungs-Schlüssel aufweist.

12. Mobiles Kommunikationsgerät (116) nach Anspruch 11, welches weiters Logikmittel (317) aufweist, die betriebsfähig sind, um einen zweiten PIN-Authentifizierungs-Schlüssel zu erzeugen.

13. Mobiles Kommunikationsgerät (116) nach Anspruch 12, welches weiters ein Logikmittel (317) aufweist, um sich bei dem Netzwerkknoten (216) unter Verwendung der PIN, die von dem anderen mobilen Kommunikationsgerät portiert wurde, zu registrieren.

## Revendications

1. Procédé de portage d'un numéro d'information personnel, PIN, d'un premier dispositif de communication mobile à un deuxième dispositif de communication mobile, comprenant :
le transfert (414, 416) d'informations d'identité dudit premier dispositif de communication mobile audit deuxième dispositif de communication mobile, ledit premier dispositif de communication mobile ayant un PIN qui est mis en correspondance avec un identifiant qui lui est associé; et
la négociation (450, 452, 454) par ledit deuxième dispositif de communication mobile avec un noeud de réseau (216) utilisant au moins une partie desdites informations d'identité pour réassigner ledit PIN à un identifiant associé audit deuxième dispositif de communication mobile.

2. Procédé de portage d'un PIN selon la revendication 1, dans lequel ledit noeud de réseau (216) peut fonctionner dans un réseau de service de données par paquets sans fil comprenant un réseau parmi un réseau de Service Général de Radiocommunication par Paquets "GPRS", un réseau de Système Mondial de Communication Mobile "GSM" à Débit Amélioré "EDGE", un réseau de 3^{ème} Génération "3G", un Réseau Numérique Amélioré Intégré "IDEN", un réseau d'Accès Multiple par Répartition en Code "CDMA" et un réseau de Système Universel de Télécommunication Mobile "UMTS".

3. Procédé de portage d'un PIN selon la revendication 1 ou 2, dans lequel ledit identifiant associé à un desdits premier et deuxième dispositifs de communication mobile comprend au moins un paramètre parmi un paramètre d'Identité Internationale d'Equipement Mobile "IMEI", un paramètre d'Identité International d'Abonné Mobile "IMSI", un paramètre de Numéro de Série Electronique "ESN", et un paramètre de Numéro d'Identification Mobile "MIN".

4. Procédé de portage d'un PIN selon la revendication 1, 2 ou 3, dans lequel lesdites informations d'identité sont transférées dudit premier dispositif de communication mobile audit deuxième dispositif de communication mobile en utilisant une session de communication poste-à-poste à l'obtention par ledit deuxième dispositif de communication mobile d'un PIN temporaire qui lui est associé.

5. Procédé de portage d'un PIN selon la revendication 4, comprenant en outre :
la détermination (408) de ce que ledit PIN temporaire est identique à un PIN utilisé par un autre dispositif de communication mobile; et
si c'est le cas, la terminaison (410) de ladite étape de transfert desdites informations d'identité audit deuxième dispositif de communication mobile.

6. Procédé de portage d'un PIN selon la revendication 5, comprenant en outre la réalisation d'un processus d'accusé de réception (416) entre lesdits premier et deuxième dispositifs de communication mobile à la fin du transfert desdites informations d'identité.

7. Dispositif de communication mobile (116), comprenant :
des moyens logiques (318) utilisables pour engager une session de communication avec un autre dispositif de communication mobile, ledit autre dispositif de communication mobile ayant un Numéro d'Information Personnel, PIN, dans lequel ledit PIN est mis en correspondance avec un identifiant relatif audit autre dispositif de communication mobile; et
des moyens logiques (318) utilisables pour négocier avec un noeud de réseau (216) utilisant au moins une partie des informations d'identité reçues dudit autre dispositif de communication mobile pour réassigner ledit PIN à un identifiant associé audit dispositif de communication mobile

8. Dispositif de communication mobile (116) selon la revendication 7, dans lequel ledit noeud de réseau (216) peut fonctionner dans un réseau de service de données par paquets sans fil (112) comprenant un réseau parmi un réseau de Service Général de Radiocommunication par Paquets "GPRS", un réseau de Système Mondial de Communication Mobile "GSM" à Débit Amélioré "EDGE", un réseau de 3^{ème} Génération "3G", un Réseau Numérique Amélioré Intégré "IDEN", un réseau d'Accès Multiple par Répartition en Code "CDMA" et un réseau de Système Universel de Télécommunication Mobile "UMTS".

9. Dispositif de communication mobile (116) selon la revendication 7 ou 8, dans lequel ledit identifiant associé à un dudit dispositif de communication mobile et dudit autre dispositif de communication mobile comprend au moins un paramètre parmi un paramètre d'Identité Internationale d'Equipement Mobile "IMEI", un paramètre d'Identité International d'Abonné Mobile "IMSI", un paramètre de Numéro de Série Electronique "ESN", et un paramètre de Numéro d'Identification Mobile "MIN".

10. Dispositif de communication mobile (116) selon la revendication 7, 8 ou 9, comprenant en outre des moyens logiques (316) utilisables pour générer un PIN temporaire pour enregistrement dans ledit noeud de réseau.

11. Dispositif de communication mobile (116) selon la revendication 7, 8, 9 ou 10, dans lequel lesdites informations d'identité comprennent une première clé d'authentification PIN générée par ledit autre dispositif de communication mobile.

12. Dispositif de communication mobile (116) selon la revendication 11, comprenant en outre des moyens logiques (317) utilisables pour générer une deuxième clé d'authentification PIN.

13. Dispositif de communication mobile (116) selon la revendication 12, comprenant en outre des moyens logiques (317) pour enregistrement dans ledit noeud de réseau (216) en utilisant ledit PIN porté dudit autre dispositif de communication mobile.
